# EUROPEAN PATENT SPECIFICATION

(11) **EP 1 981 379 B1**
(45) Date of publication and mention of the grant of the patent: **21.10.2015**
(21) Application number: 07701140.1
(22) Date of filing: 24.01.2007
(51) Int. Cl.: A47J 36/02, H05B 6/80

(54) **RECEPTACLE**
BEHÄLTNIS
RECIPIENT

(30) Priority: 30.01.2006 SE 0600182
(43) Date of publication of application: 22.10.2008
(73) Proprietor: Vinnicombe, Timothy, 791 38 Falun (SE)
(72) Inventor: Vinnicombe, Timothy, 791 38 Falun (SE)
(74) Representative: Brann AB
(86) International application number: PCT/SE2007/000064
(87) International publication number: WO 2007/086797

(56) References cited:
- FR-A1- 2 822 934
- GB-A- 2 330 053
- US-A- 5 028 754
- US-A- 5 726 428
- US-A- 5 866 885
- US-A- 5 866 885
- US-A- 5 958 277
- US-B1- 6 273 284
- US-B1- 6 325 234
- US-B1- 6 325 234

## Description

### TECHNICAL FIELD

The present invention refers to a receptacle which is operable and useful for supporting substances to be heated at separate levels in a microwave oven, thereby improving the efficiency and utilization of the microwave oven.

### BACKGROUND AND PRIOR ART

Microwave ovens find extensive use domestically and in various industrial environments for heating substances, such as food-stuff, beverages, liquid reagents, etc. In domestic applications, a frequently annoying limitation is the size and bottom area of the oven space, conventionally satisfying the average size of a singular plate for dishes. Thus, heating several food portions often requires successive operation of the microwave oven, resulting in periods of waiting for members of a meal party. Concurrently, a singular dish on a plate rarely occupies the total volume of the microwave oven, thus leaving a head space that is unused in most cases.

The present invention aims to provide a receptacle by which heating of substances in a microwave oven is available at separate levels concurrently, reducing the drawback of waiting periods and improving the efficiency and utilization of the microwave oven, specifically but not exclusively, in domestic use.

These objects are met in a receptacle as defined through the features listed in claim 1.

### SUMMARY OF THE INVENTION

Briefly, through the present invention there is suggested a receptacle operable for supporting substances to be heated in a microwave oven, the receptacle comprising a bottom space separated from a top space through a shelf, the shelf being supportable horizontally above a base, a cover dome rising from the base, the cover dome having a first cover dome section movable relative to a second cover dome section, the cover dome sections enclosing the top and bottom spaces in a closed position, the cover dome being openable inside the microwave oven to provide access to both spaces in an open position.

Also according to the invention, the receptacle is openable through separation of a first cover dome section from a second cover dome section, or alternatively through the rotary displacement of a pivotally journalled cover dome section.

Further advantageous features and embodiments of the receptacle are listed in the subordinated claims. It will be appreciated by a man skilled in the art that details included in the illustrated embodiments each add to the invention, whether these are applied separately or in different combinations under the scope of the claims.

### SHORT DESCRIPTION OF THE DRAWINGS

The invention is more fully disclosed below, with reference made to the drawings that show, diagrammatically only, different embodiments of the invention. In the drawings,
Fig. 1 shows in a perspective view a receptacle of a first embodiment in closed position;
Fig. 2 shows the receptacle of fig. 1 in open position;
Fig. 3 shows in a perspective view a receptacle of a second embodiment in closed position;
Fig. 4 shows the receptacle of fig. 3 in open position, a shelf supported therein shown with an upper disc slightly rotated relative to a lower disc of the shelf;
Fig. 5 shows in a perspective view a receptacle of a third embodiment in closed position;
Fig. 6 shows the receptacle of fig. 5 in open position;
Fig. 7 shows the lower side of a base for the receptacle;
Fig. 8 shows the lower side of another base for the receptacle;
Fig. 9 shows still another embodiment of the receptacle, in an opened position;
Fig. 10 shows yet another embodiment of the invention, likewise in the opened position, and
Fig. 11 shows a modification of the embodiment of fig. 10.

### DETAILED DESCRIPTION OF EMBODIMENTS

The receptacle referred to in this application is an article which is insertable in the microwave oven and arranged and operable for supporting substances to be heated at separate levels, i.e. at least two separate levels, while in a closed position enclosing the substances during heating and in an open position providing access to each one of said at least two levels. The receptacle is made of a material chosen from materials that are pervious to the microwaves, allowing the energy therein to be absorbed by the substances supported at separate levels. Preferably, though not exclusively, the receptacle is made of polymer or plastic material. Other materials, such as glass or even microwave pervious light metal may be used for all or some portions of the receptacle of the present invention. Advantageously though, at least some portion or portions of the receptacle can be made transparent for visual monitoring of the substances to be heated.

With reference to the drawings, the receptacle of the present invention comprises a cover dome 1 supported from a base 2. The cover dome rises from the rim 3 of the base, enclosing a space which is separated by a shelf 4 into a top space 5 and a bottom space 6. Advantageously, the base 2, shelf 4 and horizontal sections of the cover dome are all circular in shape, the cover dome though not necessarily forming a semi-sphere above the base. An inner dimension of the receptacle is adapted for accommodation of an average sized dish plate in each of said top and bottom spaces, and an outer dimension is adapted to the volume available in the microwave oven.

Naturally, the invention should not be understood as limited to a circular configuration - other rounded, oval or even polygonal shapes would be available for the base, the shelf and the cover dome while still taking advantage of the invention and teachings presented herein. The only criteria being that the receptacle fits into the average sized microwave oven and that the elements included in the receptacle cooperate as intended.

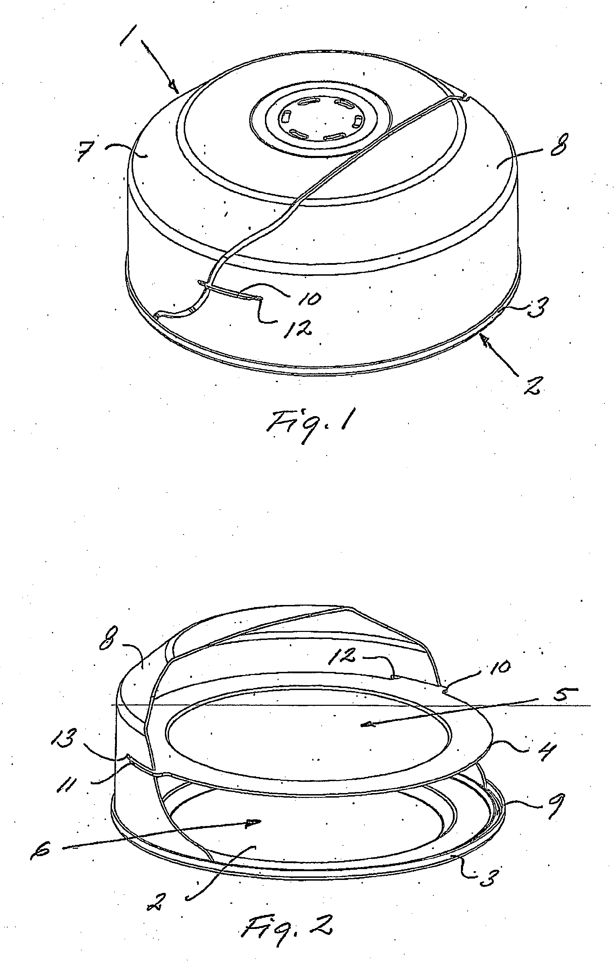

In a first embodiment shown in figs. 1 and 2, the cover dome 1 comprises a first cover dome section 7 which is movable, or more exactly separable and removable from a second cover dome section 8. Both cover dome sections 7 and 8 adjoins the base 2 by the bottom rims of the cover dome sections in assembled position being received in a groove 9 running about the periphery of the base 2. A shelf 4 is supportable horizontally above the base, the shelf separating the top and bottom spaces 5, 6 defined by the shelf and the base, respectively, together with said first and second cover dome sections in assembled and closed position as illustrated in fig. 1. By separation and removal of at least one cover dome section, access is provided to both top and bottom spaces as illustrated in fig. 2. In this first illustrated embodiment, the shelf 4 is supportable horizontally above the base through lugs 10 and 11 formed on the shelf, the lugs being insertable in corresponding notches 12 and 13 formed at substantially diametrically opposed locations in at least one of the cover domes sections 7 and 8. Alternatively, one or both cover dome sections may be releasably supported in the base and removable so as to provide access to the top and bottom spaces, from any outside direction towards the inner volume or center of the receptacle.

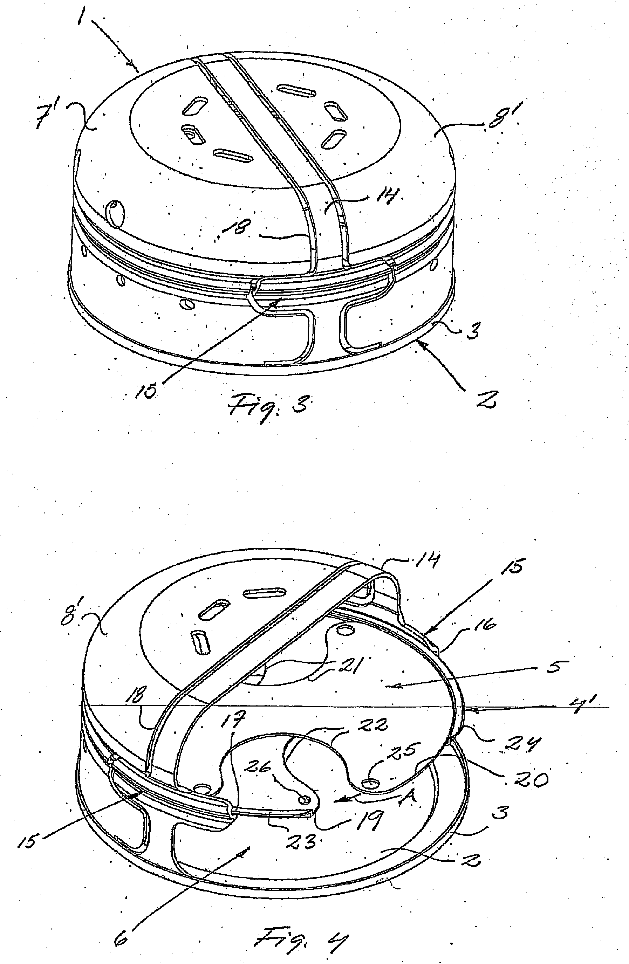

A second embodiment of the receptacle according to the present invention is shown in figs. 3 and 4. This second embodiment differs from the first embodiment in that the first and second cover dome sections 7' and 8' are individually separable and removable from a stationary cover dome section 14 connected to the base 2. The stationary cover dome section 14 rises arc-shaped from oppositely located rim portions of the base, reaching above a shelf 4' that is horizontally supported above the base. The stationary cover dome section 14 is supplementary shaped to complete the cover dome as the first and second separable cover dome sections 7',8' are assembled in the closed position of the receptacle, illustrated in fig. 3. By separation and removal of at least one cover dome section 7' or 8' from the stationary cover dome section 14, access is provided to both top and bottom spaces 5 and 6 as illustrated in fig. 4.

In this second illustrated embodiment, the shelf 4' is supported horizontally above the base by opposite rim portions of the shelf engaging corresponding supporting means 15 formed on the stationary cover dome section 14. To this end, a pair of flutes 16, 17 are formed on the stationary cover dome section 14 to engage the insertable rim portions of the shelf. Each flute 16,17 extends for a limited length in the circumferential direction about the shelf, each said flute running in opposite circumferential directions or on both sides of an imaginary (not shown in the drawings) symmetry plane through a center of the stationary cover dome section 14.

In the illustrated embodiment of figs. 3 and 4, each separable cover dome section 7',8' is a mirrored copy of the other, adjoining in assembled position the stationary cover dome section 14 through a parting line 18 that is designed for maximum access to the top and bottom spaces 5,6 in the open position of the receptacle. Advantageously, the stationary cover dome section 14 may be recessed in both circumferential directions towards the center or symmetry plane of the stationary cover dome section, above as well as below the supporting means 15, as illustrated in the drawings.

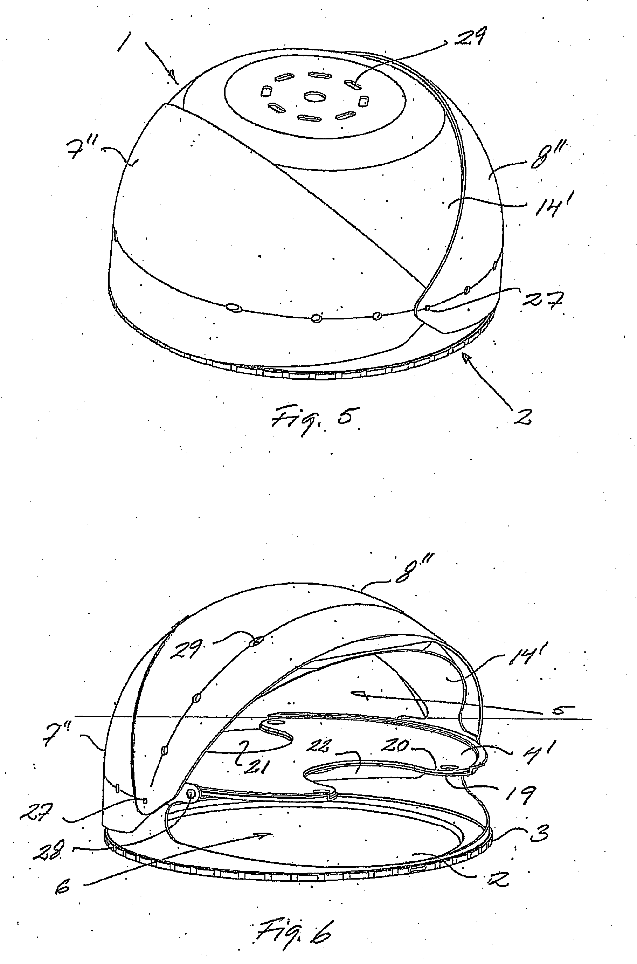

In this second embodiment, a shelf 4' is composed of a lower disc 19 and an upper disc 20, the upper disc freely rotatable relative to the lower disc. Each said lower and upper discs 19, 20 are formed with a pair of recesses 21, 22 opening in the disc peripheries, the recesses being oppositely arranged and correspondingly sized to provide, in a mating position which is illustrated in fig. 6, communication between the top and bottom spaces 5, 6, and in a non-mating position providing closure and separation between the top and bottom spaces. In fig. 4, the upper disc 20 may be rotated in direction of the arrow A towards the closing position, wherein the recesses 21, 22 of the upper disc are covered by the lower disc, and vice versa. The upper disc 20 is guided for rotation on the lower disc 19 by the rim portions of the upper disc, i.e. the rim portions which are reaching peripherally between the oppositely arranged recesses 21, 22 of said upper disc, sliding radially inside upturned rim flanges 23 and 24 reaching peripherally between the oppositely arranged recesses of the lower disc. The recesses 21, 22 are shaped, preferably, as circular cutouts opening in the disc periphery, and operative in the mating position for accommodation of articles that reach from the base into the top space, such as glasses, cups or bottles, e.g. One or several holes 25 through the upper disc 20 may be arranged to facilitate rotation relative to the lower disc by insertion of the tip of a finger. Knobs 26 slightly projecting from the upper side of the lower disc may advantageously be arranged to arrest the upper disc releasably in the mating position of the recesses.

A third embodiment of the receptacle according to the present invention is shown in figs. 5 and 6. This third embodiment differs from the first and second embodiments in that first and second cover dome sections 7" and 8" are pivotally journalled to a stationary cover dome section 14', and displaceable individually by being rotated relative to the stationary cover dome section 14'. The pivoting cover dome sections 7" and 8" may be jointly journalled on pivots 27 carried on the stationary cover dome section to extend diametrically in opposite directions from the outer side thereof. The pivots 27 reach into through holes or blind holes formed on the cover dome sections, holes that alternatively may be slotted in order to guide and control the pivoting cover dome sections for a combined pivoting and sliding motion in opening and closing, respectively. The cover dome sections 7", 8" are thus pivotable, or alternatively pivotable/slidable, radially outside the stationary cover dome section in opposite directions, from a closed position as illustrated in fig. 5, to an open, overlapping position above the top of the stationary cover dome section. In fig. 6, one of the cover dome sections 7", 8" is rotated to provide access to the top and bottom spaces 5, 6. The pivoting cover dome sections are jointly journalled on the stationary cover dome section, below the oppositely arranged supporting means for a shelf 4'.

A modification of this third embodiment may include a cover dome composed of a singular pivoting cover dome section, such as the cover dome section 8", being pivotally journalled to a stationary cover dome section including the cover dome sections 7" and 14' of the illustrated embodiment.

In this third illustrated embodiment, a shelf 4' is resting on heels 28 (of which only one is visible in fig. 6) formed on the stationary cover dome section 14' to project in pairs in diametrically opposite directions from the inner side of the stationary cover dome section. The heels 28 are provided at a height above the base 2 suitable for separating the inner volume of the receptacle into a top and bottom space, respectively. The heels 28 in each pair of heels are circumferentially spaced in opposite directions from a center or symmetry plane through the stationary cover dome section. The heels 28 can either support the shelf from below, or alternatively, locate into machined recesses or holes/grooves or set of holes/grooves formed in the edge of the shelf, such as in the circumferential edge of the lower disc of a shelf 4'.

In all embodiments, perforations 29 may be arranged for circulation of air and vaporized liquid.

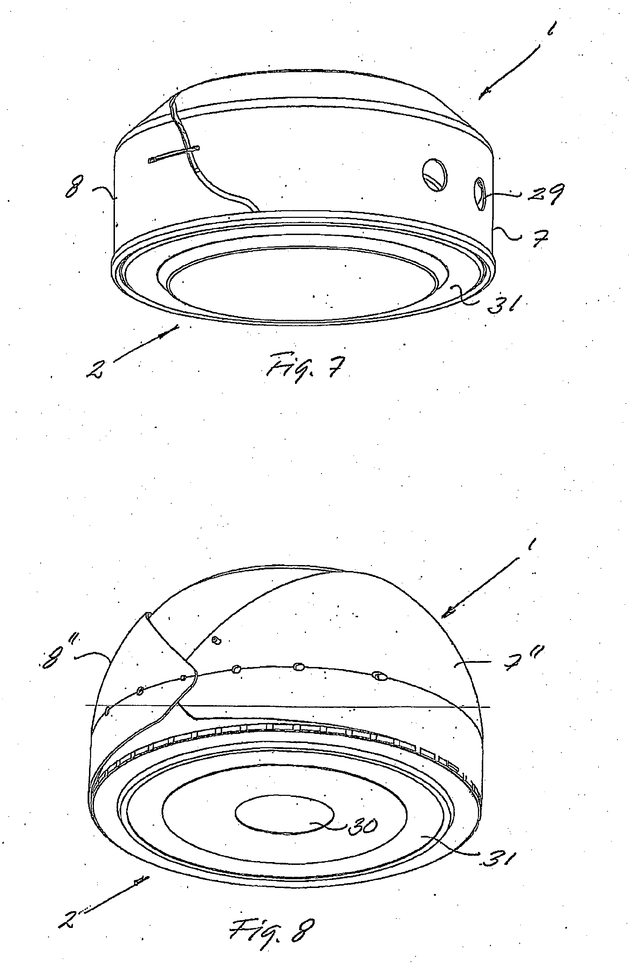

With reference to figs. 7 and 8, the lower side of a base 2 is shown in two embodiments. As apparent from the drawings, the base may be formed with a central countersink 30 arranged at a central position of the base, and/or an annular countersink 31 arranged radially outside and concentrically about the central countersink 30, if appropriate. In either case, the base is adapted to rest on a glass plate provided at the bottom of a microwave oven, or directly on the wheels of a rotary cart driven for rotation in the microwave oven. Advantageously, the annular countersink 31 may have a radial width that is over-sized for mating with cartwheels at different radial lengths from the microwave oven rotary drive. Either of the base configurations shown in fig. 7 and 8 may be used in all three embodiments shown herein.

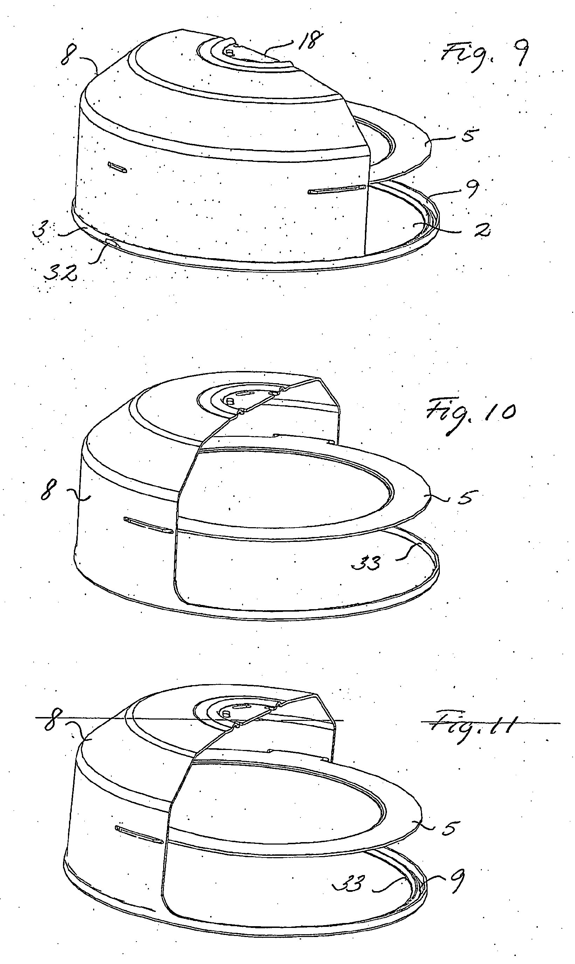

Still another embodiment is shown in fig. 9, in an opened position resulting from dismounting one of the cover dome sections. The embodiment of fig. 9 is substantially the same as the embodiment of figs. 1 and 2, and differs there from merely with respect to the accommodation of the cover dome sections on a base member. More specifically, the cover dome sections 7, 8 of the first illustrated embodiment are shown to rest with a bottom rim thereof in a groove 9 formed on a base, which could be the microwave oven's rotary plate, e.g., whereas at least one of the cover dome sections of fig. 9 additionally is pivotally hinged to a rim portion of a separate base member. To this purpose, at least one cover dome section 8 has a lug 32 formed in a region near its bottom rim. The lug 32 may be positioned angularly opposite to the parting 18 between the mating cover dome sections. In connected position, the lug 32 is fitted by insertion into an aperture formed in a corresponding region of the rim of the base member. Through the pivoting operation of the lug and aperture combination, the whole cover dome or the cover dome section 8, which supports the shelf, can be lifted/pivoted about the lug 32 to provide access to the bottom space 6 for loading/removing plates, e.g.

In the embodiment of figs. 1 and 2, one of the cover dome sections 8 is shown to have a bottom rim which, preferably on both sides, is extended to reach beyond a symmetry line or diameter (not illustrated) passing a centre of the receptacle. The design permits the cover dome section 8 to sit steadily on a base or base member, or on a table top, or on the rotary plate of the microwave oven, or on the microwave oven cartwheel carriage, and alternatively directly on the bottom of the microwave oven if appropriate. With reference to fig 10, the extended bottom rim portions of cover dome section 8 are fully extended so as to meet in a continuous, arcuate or semi-circular frame section 33. Inside the frame section, the bottom space 6 of the receptacle thus opens downwards.

The arcuate frame section 33 may be formed integrally with the cover dome section 8 as illustrated in fig. 10, or may alternatively be detachably connected therewith as illustrated in fig. 11 wherein the frame section 33 is illustrated to have a groove 9 receiving the bottom rims of the cover dome sections in the assembled condition.

From the above said it will be appreciated, that the receptacle of the present invention is arranged to be supported from a base which may be realized as a separate connectable, open or closed base member, or as a closed or open base integrally formed with one of the cover dome sections, or realized by the bottom rim of one of the cover dome sections being extended, optionally so as to form a continuous frame section having an arcuate, or semi-circular, or even polygonal shape.

A major advantage and a common characteristic for all embodiments is that the receptacle is openable so as to provide access to the top and bottom spaces concurrently, while remaining inside the microwave oven. Thus, the receptacle is available inside the oven for heating at either one or at both levels, and temperature check is possible without removing the dishes to be heated from the receptacle and oven. Another advantageous feature in the illustrated embodiments is that the receptacle is openable from two sides, reducing the need for turning and the required angular turning distance when access is desired to the top and bottom spaces. In order to facilitate turning of the receptacle inside the microwave oven, projecting formations may be arranged on the rim of the base, such as the ribs illustrated in figs. 5 and 6.

Although the disclosed embodiments comprise cover dome sections designed to substantially fully enclose the top and bottom spaces in the closed position, it will be realized that one or both cover dome sections may be designed only partially to enclose the top and bottom spaces, without departing from the scope of invention as defined in the claims.

The receptacle of the present invention is useful and operable in all applications where heating of substances is desired, such as any cooking or other application performed in microwave ovens, normal ovens, induction or convection ovens, e.g., through a suitable choice of material. The receptacle as shown is also useful in any storage application whenever not being used for heating applications. Variations of the shown embodiments, such as up- or downscaling of dimensions, e.g., are possible in order to adapt the receptacle for scientific, industrial and even manufacturing applications. The receptacle is thus useful in any of the described fields where its application adds or creates a technical advantage, time and space saving, ergonomic advantages, e.g.

The invention is defined through the appended claims, drafted to encompass the shown embodiments and all modifications thereof being derivable from the teachings presented above.

## Claims

1. A receptacle operable for supporting substances to be heated in a microwave oven, the receptacle comprising a bottom space (6) separated from a top space (5) through a shelf, the shelf (4:4') being supportable horizontally above a base, **characterized by** a cover dome rising from the base, the cover dome having a first cover dome section (7;7';7") movable relative to a second cover dome section (8;8';8"), the cover dome sections enclosing the top and bottom spaces in a closed position, and the cover dome being openable inside the microwave oven to provide access to both spaces (5,6) in an open position.

2. The receptacle of claim 1, wherein the cover dome opens through separation and removal of a first cover dome section from a second cover dome section.

3. The receptacle of claim 1, wherein the cover dome opens through the rotary displacement of a pivotally journalled cover dome section (7"; 8").

4. The receptacle of claim 2 or 3, wherein the cover dome is openable so as to provide access to the top and bottom spaces from opposite directions towards a center of the receptacle.

5. The receptacle of claim 1, wherein the shelf is supportable in a cover dome section (14; 14") stationary connected to a base.

6. The receptacle of claim 5, wherein two pivoting cover dome sections (7"; 8") are jointly journalled on the stationary cover dome section (14') and pivoting radially outside the stationary cover dome section in opposite directions towards an open, overlapping position above the top of the stationary cover dome section.

7. The receptacle of claim 6, wherein the stationary cover dome section (14;14') rises from opposite rim portions of the base, the stationary cover dome section forming an arc above the shelf when the shelf is supported above the base by opposite rim portions of the shelf engaging corresponding supporting means (15) formed on the stationary cover dome section.

8. The receptacle of claim 7, wherein the shelf supporting means on the stationary cover dome section comprises a pair of flutes (16, 17) of limited length extending in the circumferential direction about the shelf, each said flute extended in opposite circumferential directions from a symmetry plane through a center of the stationary cover dome section (14).

9. The receptacle of claim 7, wherein the shelf supporting means on the stationary cover dome section comprises a pair of heels (28), respectively, the heels in each pair of heels circumferentially spaced in opposite circumferential directions from a symmetry plane through a center of the stationary cover dome section (14').

10. The receptacle of claim 7, 8 or 9, wherein the stationary cover dome section (14;14'), above as well as below the supporting means (15), is recessed in both circumferential directions towards a symmetry plane through a center of the stationary cover dome section.

11. The receptacle of claims 5 to 10, wherein the pivoting cover dome sections (7"; 8") are jointly journalled (27) below the oppositely arranged supporting means on the stationary cover dome section.

12. The receptacle of any previous claim, wherein the shelf comprises a lower disc (19) and an upper disc (20), the upper disc freely rotatable on the lower disc, each said lower and upper disc further comprising a pair of recesses (21,22) opening in the disc peripheries, the recesses being oppositely arranged and correspondingly sized to provide, in a mating position, communication between said bottom and top spaces, and in a non-mating position to provide closure between said bottom and top spaces.

13. The receptacle of claim 12, wherein the upper disc is guided for rotation on the lower disc by the rim portions thereof, which are reaching peripherally between the oppositely arranged recesses of said upper disc, sliding radially inside upturned rim flanges (23,24) reaching peripherally between the oppositely arranged recesses of the lower disc.

14. The receptacle of claim 1, wherein the shelf is supportable in a cover dome section (8) which is connectable to a separate base member by insertion of a bottom rim of the cover dome section into a groove (9) running about the periphery of the base.

15. The receptacle of claim 14, wherein the cover dome section (8) is pivotally connected to the base member through a hinge provided by a lug (32) that is formed on the cover dome section so as to be insertable into an aperture formed in a rim portion of the base member.

16. The receptacle of claim 14 or 15, wherein the base in a lower side is formed with a central countersink (30), as well as an annular countersink (31) arranged radially outside and concentric with the central countersink, the annular countersink adapted to rest on the cartwheels of a microwave oven rotary cart.

17. The receptacle of claim 16, wherein the annular countersink has a radial width which is over-sized for mating with cartwheels at different radial lengths from the microwave oven rotary drive.

18. The receptacle of claim 1, wherein the shelf is supportable in a cover dome section (8), the bottom rim of which is extended to provide an open base that is integrally formed with the cover dome section.

19. The receptacle of claim 18, wherein the extended bottom rim of the cover dome section (8) is formed into a continuous, or a semi-circular, arcuate or polygonal frame section (33) providing an open base.

20. The receptacle of any previous claim, wherein the cover dome has perforations (29) for circulation of air and vaporized liquids.

21. The receptacle of any previous claim, fabricated from micro wave pervious material, such as plastic material, glass or micro wave pervious light metal.

## Patentansprüche

1. Behältnis zur Aufnahme von Substanzen, die in einem Mikrowellenofen zu erwärmen sind, wobei das Behältnis einen unteren Raum (6) aufweist, der von einem oberen Raum (5) durch eine Platte getrennt ist, wobei die Platte (4; 4') horizontal oberhalb einer Basis gehalten werden kann, **dadurch gekennzeichnet, dass** eine Abdeckhaube sich von der Basis aus aufwärts erstreckt, wobei die Abdeckhaube einen ersten Abdeckhaube-Abschnitt (7; 7'; 7") aufweist, der bezüglich eines zweiten Abdeckhaube-Abschnitts (8; 8'; 8") bewegbar ist, wobei die Abdeckhaube-Abschnitte in einer geschlossenen Position den oberen und unteren Raum umschließen und wobei die Abdeckhaube innerhalb des Mikrowellenofens geöffnet werden kann, um in einer geöffneten Position einen Zugang zu beiden Räumen (5, 6) zu erlauben.

2. Behältnis nach Anspruch 1, wobei die Abdeckhaube durch Trennen und Entfernen eines ersten Abdeckhaube-Abschnitts von einem zweiten Abdeckhaube-Abschnitt geöffnet werden kann.

3. Behältnis nach Anspruch 1, wobei die Abdeckhaube durch Drehen eines drehbar gelagerten Abdeckhaube-Abschnitts (7"; 8 ") geöffnet werden kann.

4. Behältnis nach Anspruch 2 oder 3, wobei die Abdeckhaube geöffnet werden kann, derart, dass ein Zugang zu dem oberen und unteren Raum von entgegengesetzten Richtungen aus hin zur Mitte des Behältnisses bereitgestellt ist.

5. Behältnis nach Anspruch 1, wobei die Platte in einem Abdeckhaube-Abschnitt (14; 14') anbringbar ist, der stationär mit einer Basis verbunden ist.

6. Behältnis nach Anspruch 5, wobei zwei drehbare Abdeckhaube-Abschnitte (7"; 8") gemeinsam an dem stationären Abdeckhaube-Abschnitt (14') gelagert sind und radial außerhalb des stationären Abdeckhaube-Abschnitts in entgegengesetzte Richtungen in eine geöffnete Position drehbar sind, in welcher sie übereinander und oberhalb des stationären Abdeckhaube-Abschnitts angeordnet sind.

7. Behältnis nach Anspruch 6, wobei der stationäre Abdeckhaube-Abschnitt (14; 14') sich von gegenüberliegenden Randabschnitten der Basis aus aufwärts erstreckt und der stationäre Abdeckhaube-Abschnitt oberhalb der Platte einen Bogen bildet, wenn die Platte mit Hilfe von gegenüberliegenden Randabschnitten der Platte, die in Eingriff mit entsprechenden Halteeinrichtungen (15) sind, die an dem stationären Abdeckhaube-Abschnitt gebildet sind, oberhalb der Basis angebracht ist.

8. Behältnis nach Anspruch 7, wobei die die Platte haltenden Einrichtungen an dem stationären Abdeckhaube-Abschnitt ein Paar Rillen (16, 17) begrenzter Länge aufweisen, die sich in Umfangsrichtung der Platte erstrecken, wobei sich jede Rille von einer mittig durch den stationären Abdeckhaube-Abschnitt (14) hindurchgehenden Symmetrieebene aus in entgegengesetzte Umfangsrichtungen erstreckt.

9. Behältnis nach Anspruch 7, wobei die die Platte haltenden Halteeinrichtungen an dem stationären Abdeckhaube-Abschnitt jeweils ein Paar Vorsprünge (28) aufweisen, wobei die Vorsprünge jedes Paars in entgegengesetzte Umfangsrichtungen in einem Winkelabstand von einer mittig durch den stationären Abdeckhaube-Abschnitt (14') hindurchgehenden Symmetrieebene angeordnet sind.

10. Behältnis nach Anspruch 7, 8 oder 9, wobei der stationäre Abdeckhaube-Abschnitt (14, 14') sowohl oberhalb wie auch unterhalb der Halteeinrichtungen (15) in beide Umfangsrichtungen zu einer mittig durch den stationären Abdeckhaube-Abschnitt hindurchgehenden Symmetrieebene hin ausgespart ist.

11. Behältnis nach einem der Ansprüche 5 bis 10, wobei die drehbaren Abdeckhaube-Abschnitte (7"; 8") unterhalb der sich gegenüberliegenden Halteeinrichtungen gemeinsam an dem stationären Abdeckhaube-Abschnitt gelagert sind (27).

12. Behältnis nach einem der vorstehenden Ansprüche, wobei die Platte eine untere Scheibe (19) und eine auf der unteren Scheibe frei drehbare obere Scheibe (20) aufweist, wobei sowohl die untere wie auch die obere Scheibe ein Paar Aussparungen (21, 22) aufweisen, die in den jeweiligen Scheibenrand eingeschnitten sind, wobei die Aussparungen sich gegenüberliegen und entsprechend bemessen sind, um in einer zueinander ausgerichteten Position einen Durchlass zwischen dem unteren und oberen Raum bereitzustellen und in einer zueinander nichtausgerichteten Position einen Verschluss zwischen dem unteren und oberen Raum bereitzustellen.

13. Behältnis nach Anspruch 12, wobei die obere Scheibe auf der unteren Scheibe über deren Randabschnitte drehbar geführt wird, die sich in Umfangsrichtung zwischen den gegenüberliegenden Aussparungen der oberen Scheibe erstrecken und radial innerhalb von sich zwischen den gegenüberliegenden Aussparungen erstreckenden aufwärtsgebogenen Umfangsrandflanschen (23, 24) der unteren Scheibe gleiten.

14. Behältnis nach Anspruch 1, wobei die Platte durch einen Abdeckhaube-Abschnitt (8) gehalten werden kann, der mit einem separaten Basiselement durch Einsetzen eines unteren Randes des Abdeckhaube-Abschnitts in eine Rille (9), die um die Peripherie der Basis verläuft, verbindbar ist.

15. Behältnis nach Anspruch 14, wobei der Abdeckhaube-Abschnitt (8) mit dem Basiselement durch ein von einer an dem Abdeckhaube-Abschnitt gebildeten Nase (32) bereitgestelltes Scharnier schwenkbar verbunden ist, damit es in eine an einem Randabschnitt des Basiselements gebildete Öffnung eingesetzt werden kann.

16. Behältnis nach Anspruch 14 oder 15, wobei die Basis an einer Unterseite mit einer mittig angebrachten Versenkung (30) ausgebildet ist, sowie mit einer ringförmigen Versenkung (31), die radial außerhalb und konzentrisch zu der mittig angebrachten Versenkung angebracht ist, wobei die ringförmige Versenkung auf den Rädern eines Mikrowellenofen-Drehwagens aufliegen kann.

17. Behältnis nach Anspruch 16, wobei die ringförmige Versenkung eine radiale Breite hat, die überdimensioniert ist zum Zusammenpassen mit Rädern bei unterschiedlichen radialen Längen von dem Mikrowellenofen-Drehantrieb.

18. Behältnis nach Anspruch 1, wobei die Platte durch einen Abdeckhaube-Abschnitt (8) gehalten werden kann, dessen unterer Rand erweitert ist, um eine offene Basis bereitzustellen, die mit dem Abdeckhaube-Abschnitt integral ausgebildet ist.

19. Behältnis nach Anspruch 18, wobei der erweiterte untere Rand des Abdeckhaube-Abschnitts (8) als durchgehender oder halbkreisförmiger, bogenförmiger oder polygonaler Rahmenabschnitt (33) ausgebildet ist, der eine offene Basis bereitstellt.

20. Behältnis nach einem der vorhergehenden Ansprüche, wobei die Abdeckhaube Perforierungen (29) zur Zirkulation von Luft und dampfförmigen Flüssigkeiten aufweist.

21. Behältnis nach einem der vorhergehenden Ansprüche, das aus einem mikrowellendurchlässigen Material hergestellt ist, z.B. aus Plastikmaterial, Glas oder einem mikrowellendurchlässigen Leichtmetall.

## Revendications

1. Récipient utilisable pour maintenir des substances devant être chauffées dans un four à micro-ondes, le récipient comprenant un espace inférieur (6) séparé d'un espace supérieur (5) au moyen d'une étagère, l'étagère (4 ; 4') pouvant être maintenue horizontalement au-dessus d'une base, **caractérisé par** un dôme formant couvercle s'élevant de la base, le dôme formant couvercle ayant une première section formant couvercle (7 ; 7' ; 7") mobile par rapport à une deuxième section formant couvercle (8 ; 8' ; 8"), les sections du dôme formant couvercle renfermant les espaces supérieur et inférieur dans une position fermée, et le dôme formant couvercle pouvant s'ouvrir à l'intérieur du four à micro-ondes pour permettre un accès aux deux espaces (5, 6) dans une position ouverte.

2. Récipient selon la revendication 1, dans lequel le dôme formant couvercle s'ouvre en séparant et en enlevant une première section de dôme formant couvercle d'une deuxième section de dôme formant couvercle.

3. Récipient selon la revendication 1, dans lequel le dôme formant couvercle s'ouvre par le déplacement rotatif d'une section de dôme formant couvercle tourillonnée de façon pivotante (7" ; 8").

4. Récipient selon la revendication 2 ou 3, dans lequel le dôme formant couvercle peut s'ouvrir de manière à permettre l'accès aux espaces supérieur et inférieur depuis des sens opposés vers un centre du récipient.

5. Récipient selon la revendication 1, dans lequel l'étagère peut être maintenue dans une section de dôme formant couvercle (14 ; 14") fixe raccordée à une base.

6. Récipient selon la revendication 5, dans lequel deux sections de dôme formant couvercle pivotantes (7" ; 8" sont tourillonnées solidairement sur la section de dôme formant couvercle fixe (14') et pivotant radialement à l'extérieur de la section de dôme formant couvercle fixe dans des sens opposés vers une position ouverte, de chevauchement au-dessus du sommet de la section de dôme formant couvercle fixe.

7. Récipient selon la revendication 6, dans lequel la section de dôme formant couvercle fixe (14 ; 14') s'élève des portions de rebord opposées de la base, la section de dôme formant couvercle fixe formant un arc au-dessus de l'étagère lorsque l'étagère est maintenue au-dessus de la base par des portions de rebord opposées de l'étagère se mettant en prise avec des moyens de support correspondants (15) formés sur la section de dôme formant couvercle fixe.

8. Récipient selon la revendication 7, dans lequel les moyens de support d'étagère sur la section de dôme formant couvercle fixe comprennent deux gorges (16, 17) de longueur limitée s'étendant dans le sens circonférentiel autour de l'étagère, chaque dite gorge étendue dans des sens circonférentiels opposés à partir d'un plan de symétrie au travers d'un centre de la section de dôme formant couvercle fixe (14).

9. Récipient selon la revendication 7, dans lequel les moyens de support d'étagère sur la section de dôme formant couvercle comprennent deux talons (28), respectivement, les talons dans chaque paire de talons espacés de façon circonférentielle dans des sens circonférentiels opposés à partir d'un plan de symétrie au travers d'un centre de la section de dôme formant couvercle fixe (14').

10. Récipient selon la revendication 7, 8 ou 9, dans lequel la section de dôme formant couvercle fixe (14 ; 14'), au-dessus comme au-dessous des moyens de support (15), est évidée dans les deux sens circonférentiels vers un plan de symétrie au travers d'un centre de la section de dôme formant couvercle fixe.

11. Récipient selon les revendications 5 à 10, dans lequel les sections de dôme formant couvercle (7" ; 8") sont tourillonnées solidairement (27) au-dessous des moyens de support agencés de façon opposée sur la section de dôme formant couvercle fixe.

12. Récipient selon l'une quelconque des revendications précédentes, dans lequel l'étagère comprend un disque inférieur (19) et un disque supérieur (20), le disque supérieur pouvant tourner librement sur le disque inférieur, chaque dit disque inférieur et supérieur comprenant en outre deux évidements (21, 22) s'ouvrant aux périphéries de disque, les évidements étant agencés de façon opposée et dimensionnés en conséquence pour fournir, dans une position d'accouplement, une communication entre lesdits espaces inférieur et supérieur, et dans une position de non-accouplement pour fournir la fermeture entre lesdits espaces inférieur et supérieur.

13. Récipient selon la revendication 12, dans lequel le disque supérieur est guidé en rotation sur le disque inférieur par les portions de rebord de celui-ci, qui s'étendent de façon périphérique entre les évidements agencés de façon opposée dudit disque supérieur, coulissant radialement à l'intérieur de brides de rebord tournées vers le haut (23, 24) s'étendant de façon périphérique entre les évidements agencés de façon opposée du disque inférieur.

14. Récipient selon la revendication 1, dans lequel l'étagère peut être soutenue dans une section de dôme formant couvercle (8) qui peut être raccordée à un élément de base distinct par insertion d'un rebord inférieur de la section de dôme formant couvercle dans une rainure (9) courant à la périphérie de la base.

15. Récipient selon la revendication 14, dans lequel la section de dôme formant couvercle (8) est raccordée de manière pivotante à l'élément de base au moyen d'une charnière fournie par un ergot (32) qui est formé sur la section de dôme formant couvercle de manière à pouvoir être inséré dans une ouverture formée dans une portion formant rebord de l'élément de base.

16. Récipient selon la revendication 14 ou 15, dans lequel la base d'un côté inférieur est formée avec une fraisure centrale (30), ainsi qu'une fraisure annulaire (31) agencées radialement à l'extérieur et de façon concentrique avec la fraisure centrale, la fraisure annulaire adaptée pour reposer sur les roues d'un charriot rotatif du four à micro-ondes.

17. Récipient selon la revendication 16, dans lequel la fraisure annulaire a une largeur radiale qui est surdimensionnée pour s'accoupler avec des roues à des longueurs radiales différentes à partir de l'unité rotative du four à micro-ondes.

18. Récipient selon la revendication 1, dans lequel l'étagère peut être soutenue dans une section de dôme formant couvercle (8), dont le rebord de fond est étendu pour fournir une base ouverte qui est formée d'une seule pièce avec la section de dôme formant couvercle.

19. Récipient selon la revendication 18, dans lequel le rebord inférieur étendu de la section de dôme formant couvercle (8) est formé dans une section de cadre continue, ou semi-circulaire, en forme d'arc ou polygonale (33) fournissant une base ouverte.

20. Récipient selon l'une quelconque des revendications, dans lequel le dôme formant couvercle possède des perforations (29) pour la circulation de l'air et des liquides évaporés.

21. Récipient selon l'une quelconque des revendications, fabriqué à partir d'un matériau conducteur de micro-ondes, tel qu'un matériau plastique, du verre ou d'un métal léger conducteur de micro-ondes.
